# EUROPÄISCHE PATENTANMELDUNG

(11) **EP 2 995 440 A1**
(43) Veröffentlichungstag der Anmeldung: **16.03.2016**
(21) Anmeldenummer: 15184609.4
(22) Anmeldetag: 10.09.2015
(51) Int. Cl.: B29C 51/12

(54) **VERFAHREN UND VORRICHTUNG FÜR DAS HERSTELLEN KOMPLEXER KUNSTSTOFFBAUTEILE MITTELS THERMOFORMEN**

(30) Priorität: 10.09.2014 DE 102014113006
(71) Anmelder: Universität Stuttgart, 70174 Stuttgart (DE)
(72) Erfinder: Prof. Dr. Bonton, Christian, 47804 Krefeld (DE); Neubig, Benjamin, 70197 Stuttgart (DE)
(74) Vertreter: Schmid, Wolfgang

(57) **Zusammenfassung**

Bei einem Verfahren zur Herstellung eines Bauteils aus Kunststoff wird ein Anbauteil (3) in ein Thermoformwerkzeug (4) eingelegt und mit dem Thermoformwerkzeug (4) wird eine Folie (2) mittels Thermoformen umgeformt und das Anbauteil (3) mit der Folie (2) verbunden, um das Bauteil (1) zu bilden.

## Beschreibung

Die Erfindung betrifft ein Verfahren zur Herstellung eines Bauteils aus Kunststoff mittels Thermoformen. Des Weiteren betrifft die Erfindung eine Vorrichtung zur Durchführung des Verfahrens.

Bei dem aus dem allgemeinen Stand der Technik bekannten Verfahren des Thermoformens werden flächige, aus einem thermoplastischen Material bestehende Halbzeuge in Form von Folien oder Platten bis in den thermoelastischen Zustand hinein erwärmt und anschließend mechanisch und/oder durch das Aufbringen einer Druckdifferenz zwischen einer Oberseite und einer Unterseite der Folie zu einem dreidimensionalen Formteil umgeformt. Hierbei ist eine Positiv- und eine Negativumformung möglich.

Obwohl das Thermoformen sehr viele Vorteile bietet, besteht ein Nachteil dieses Verfahrens darin, dass die auf diese Weise herstellbaren Formteile überwiegend becher- oder schalenförmig sind und nur mit einer verhältnismäßig geringen Komplexität ausgeführt werden können. Deshalb ist auch die Integration von Funktionsteilen, wie beispielsweise Schnapphaken oder Schraubdome, oder Versteifungselementen in ein Thermoformteil nicht möglich. Auch Rippen oder dergleichen können beim Thermoformen nicht hergestellt werden. Aus diesem Grund finden technische Thermoformteile insbesondere Anwendung als einfache Gehäuse oder Verkleidungsteile in Fahrzeugen.

Üblicherweise wird zur Herstellung solcher komplexerer Bauteile daher ein Spritzgießverfahren eingesetzt, zumal bei mittels Thermoformen hergestellten Bauteilen die nachträgliche Montage von Anbauteilen aller Art, wie beispielsweise Verbindungs- oder Versteifungselementen, zum einen weitere Vorrichtungen und zum anderen einen erhöhten Maschinen-, Geräte- und Personalaufwand erfordert und daher mit sehr hohen Kosten verbunden ist.

Der Nachteil des Spritzgießverfahrens besteht jedoch darin, dass insbesondere bei großen Bauteilen aufgrund der beim Spritzgießen notwendigen, sehr hohen und durch das Spritzgießwerkzeug aufzunehmenden Drücke die zur Durchführung des Spritzgießverfahrens erforderlichen Werkzeuge meist sehr groß und damit entsprechend teuer sind.

Auch bei der ebenfalls mit Spritzgießwerkzeugen durchgeführten Hinterspritztechnik, bei der zunächst aus einer Folie ein Thermoformteil erstellt, in das Spritzgießwerkzeug eingelegt und mit Kunststoffschmelze hinterspritzt wird, sind bei großflächigen Formteilen große und sehr aufwändige Werkzeuge erforderlich.

Es ist daher Aufgabe der vorliegenden Erfindung, ein Verfahren und eine Vorrichtung zur Herstellung eines Bauteils aus Kunststoff zu schaffen, das in der Lage ist, mit dem grundsätzlichen Verfahren des Thermoformens auch aufwändigere Bauteile mit einem oder mehreren Anbauteilen zu erzeugen.

Erfindungsgemäß wird diese Aufgabe durch die in Anspruch 1 genannten Merkmale gelöst.

Durch die Verbindung des Anbauteils mit der Folie innerhalb des Thermoformwerkzeugs zu dem fertigen Bauteil und im Wesentlichen simultan zur Thermoformung der Folie bzw. in einem einzigen Arbeitsschritt können auch komplexere Bauteile mit einer sehr hohen Qualität und insbesondere mit einer sehr guten Oberfläche, allgemein also wertvollere Bauteile, hergestellt werden.

Das erfindungsgemäße Verfahren ermöglicht es dabei auf sehr einfache Weise, Anbauteile, wie Versteifungselemente, Funktionselemente oder dergleichen, in einem Verarbeitungsschritt während der Thermoformung in das Thermoformteil zu integrieren. Dabei sind im Gegensatz zu bekannten Verfahren keine zusätzlichen Montageschritte erforderlich und das Verfahren des Thermoformens wird gegenüber dem bislang bevorzugt eingesetzten Spritzgießverfahren wesentlich konkurrenzfähiger, da die für das Thermoformen eingesetzten Thermoformwerkzeuge aufgrund der erheblich geringeren Umformdrücke wesentlich kleiner, einfacher und kostengünstiger sind als bekannte Spritzgießwerkzeuge. Dadurch können beispielsweise großflächige Gehäuseteile, die mit Funktionselementen, Versteifungselementen oder anderen Anbauteilen ausgestattet werden müssen, auch bei kleineren Stückzahlen wesentlich wirtschaftlicher als bislang hergestellt werden.

Gegenüber anderen Thermoformteilen, bei denen bislang in zusätzlichen Arbeitsschritten und durch zusätzliche Vorrichtungen und Maschinen Funktions- und Versteifungselemente nachträglich angebracht werden, kann auf diese zusätzlichen Arbeitsschritte verzichtet werden, so dass auch gegenüber diesen Verfahren deutliche Kostenvorteile erzielt werden.

Ein weiterer Vorteil des erfindungsgemäßen Verfahrens besteht in der einfachen und schnellen Durchführbarkeit desselben, so dass hochwertige Bauteile mit geringen Fertigungskosten erzeugt werden können.

Eine einfache Herstellung des Anbauteils kann sich ergeben, wenn in einer vorteilhaften Weiterbildung der Erfindung das Anbauteil vor dem Verbinden desselben mit der Folie mittels Spritzgießen, Zerspanung oder einem generativen Verfahren hergestellt wird.

Um sowohl die Verbindung der Folie mit dem Anbauteil als auch die mittels Thermoformen durchgeführte Umformung der Folie selbst zu vereinfachen, kann in einer sehr vorteilhaften Weiterbildung der Erfindung vorgesehen sein, dass die Folie vor dem Umformen mit dem Thermoformwerkzeug in den thermoelastischen Bereich erwärmt wird.

Eine weitere sehr vorteilhafte Ausgestaltung des erfindungsgemäßen Verfahrens kann darin bestehen, dass das Anbauteil mittels thermischen Fügens mit der Folie zu dem Bauteil verbunden wird. Durch das thermische Fügen des Anbauteils mit der Folie lässt sich zum einen eine sehr feste und sichere Verbindung zwischen dem Anbauteil und der Folie erreichen, und es handelt sich zum anderen um eine kostengünstige Variante des erfindungsgemäßen Verfahrens.

Eine sehr hohe Prozesssicherheit kann erreicht werden, wenn zum thermischen Fügen des Anbauteils mit der Folie das Anbauteil und/oder die Folie zumindest in einem Verbindungsbereich zwischen dem Anbauteil und der Folie lokal erwärmt und in den schmelzflüssigen Zustand überführt werden.

In diesem Zusammenhang kann vorgesehen sein, dass die zur Überführung der Folie und des Anbauteils in den schmelzflüssigen Zustand erforderliche thermische Energie in das Anbauteil eingebracht und durch den Kontakt des Anbauteils mit der Folie auf diese übertragen wird. Bei dieser Vorgehensweise wird im Wesentlichen das Anbauteil erwärmt und damit in den schmelzflüssigen Zustand gebracht, wobei die auf der der Folie zugerichteten Seite des Anbauteils vorhandene Wärme durch den Kontakt des Anbauteils mit der Folie auf die Folie übertragen wird. Die Folie kann im Augenblick des Kontakts mit dem Anbauteil auch bereits teilweise oder vollständig umgeformt sein.

Alternativ dazu kann auch vorgesehen sein, dass die zur Überführung der Folie und des Anbauteils in den schmelzflüssigen Zustand erforderliche thermische Energie in die Folie eingebracht und durch den Kontakt der Folie mit dem Anbauteil auf das Anbauteil übertragen wird. Diese dem im vorhergehenden Absatz genannten Logik folgende Ausführung ist insbesondere bei einer ausreichen dicken Folie denkbar.

Eine einfache Einbringung der erforderlichen thermischen Energie kann dadurch erfolgen, dass diese thermische Energie mittels Infrarotstrahlung, Laserstrahlung, Kontaktheizung, Heißluft, Ultraschall oder Reibung in das Anbauteil und/oder die Folie eingebracht wird.

Alternativ kann vorgesehen sein, dass das Anbauteil mittels Kleben mit der Folie zu dem Bauteil verbunden wird. Auch das Verfahren des Klebens kann, bei einer entsprechenden Eignung der beteiligten Materialien der Folie und des wenigstens einen Anbauteils sowie des verwendeten Klebemittels, zum Erreichen einer sicheren Verbindung zwischen der Folie und dem Anbauteil geeignet sein.

Eine Vorrichtung zur Durchführung des in Anspruch 8 angegebenen Verfahrens ergibt sich aus den Merkmalen des Anspruchs 10. Mit dieser Vorrichtung kann die notwendige thermische Energie für den thermischen Fügevorgang auf sehr einfache Art und Weise in den Verbindungsbereich zwischen der Folie und dem Anbauteil eingebracht werden.

Nachfolgend sind Ausführungsbeispiele der Erfindung anhand der Zeichnung prinzipmäßig dargestellt.

Es zeigt:
- Fig. 1: einen ersten Schritt des erfindungsgemäßen Verfahrens;
- Fig. 2: einen zweiten Schritt des Verfahrens aus Fig. 1;
- Fig. 3: ein Beispiel eines mit dem erfindungsgemäßen Verfahren herstellten Bauteils;
- Fig. 4: einen Schritt bei einer Abwandlung des erfindungsgemäßen Verfahrens;
- Fig. 5: einen ersten Schritt bei einer weiteren Abwandlung des erfindungsgemäßen Verfahrens;
- Fig. 6: einen ersten Schritt bei einer weiteren Abwandlung des erfindungsgemäßen Verfahrens;
- Fig. 7: einen zweiten Schritt bei dem Verfahren aus Fig. 5 oder Fig. 6; und
- Fig. 8: einen ersten Schritt bei einer weiteren Abwandlung des erfindungsgemäßen Verfahrens.

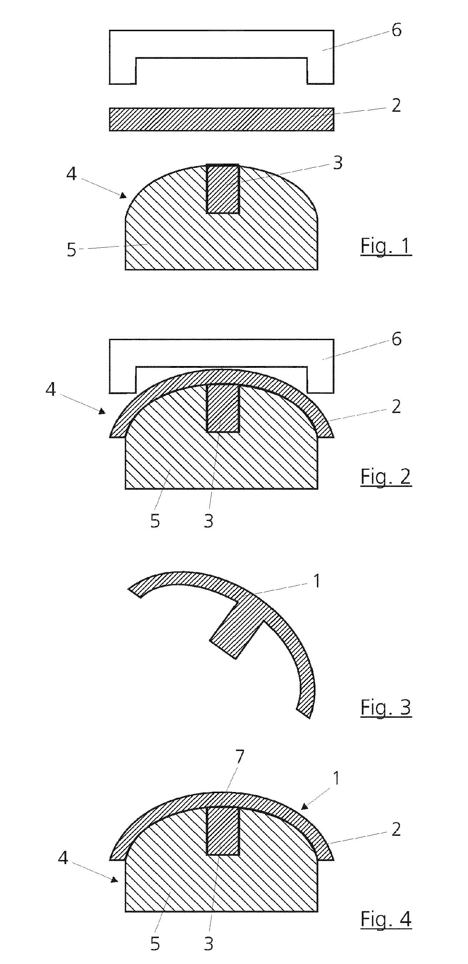

Fig. 1 zeigt einen ersten Schritt bei einer ersten Variante eines Verfahrens zur Herstellung eines in Fig. 3 dargestellten Bauteils 1, das aus einem Kunststoffmaterial besteht. Wie nachfolgend ausführlich beschrieben, wird das Bauteil 1 aus einer ein Halbzeug darstellenden Folie 2 und wenigstens einem Anbauteil 3 hergestellt, die miteinander verbunden werden und die ebenfalls vorzugsweise aus einem Kunststoffmaterial bestehen. Bei dem wenigstens einen Anbauteil 3 kann es sich um ein Funktionsteil, wie beispielsweise einen Schnapphaken oder einen Schraubdom, oder um ein Versteifungselement, wie beispielsweise eine Verrippung, handeln. Als Folie wird hierin ein flächiges Teil mit einer Dicke von bis zu 10 mm angesehen.

Das in den Figuren dargestellte Anbauteil 3 ist als rein beispielhaft anzusehen und kann auch völlig andere Formen und Größen, insbesondere relativ zu der Größe der Folie 2 aufweisen. Auch die Folie 2 bzw. der durch das Thermoformen aus der Folie 2 hergestellte Teil des Bauteils 1 kann vollkommen anders gestaltet sein als in den Figuren dargestellt.

Das Anbauteil 3 kann beispielsweise mittels Spritzgießen hergestellt werden. Dieses Spritzgießen erfolgt selbstverständlich vor dem Verbinden bzw. Fügen des Anbauteils 3 mit der Folie 2. Da das Anbauteil 3 relativ zu der Folie 2 eine geringe Größe aufweist, ist die Herstellung desselben mittels Spritzgießen unproblematisch, da hierfür sehr viel kleinere Werkzeuge verwendet werden können. Obwohl es bevorzugt ist, das Anbauteil 3 mittels Spritzgießen herzustellen, wäre es auch denkbar, einen Schnapphaken oder ein ähnliches Anbauteil 3 zerspanend beispielsweise aus einem Rundprofil oder mittels eines generativen Verfahrens herzustellen.

Vorzugsweise bestehen die Folie 2 und das Anbauteil 3 aus demselben oder zumindest einem ähnlichen Kunststoffmaterial, wie beispielsweise ABS, Polycarbonat, Polypropylen oder ähnliches. Grundsätzlich können nicht nur identische, sondern auch ähnliche Kunststoffmaterialien miteinander thermisch gefügt werden, wie beispielsweise ABS und Polycarbonat.

In dem nachfolgend ausführlich beschriebenen Verfahren wird ein sehr schematisch dargestelltes Thermoformwerkzeug 4 eingesetzt, das im vorliegenden Fall ein Werkzeugunterteil 5 und ein Werkzeugoberteil 6 aufweist. Selbstverständlich sind das aus der Folie 2 und dem wenigstens einen Anbauteil 3 hergestellte Bauteil 1 sowie das Thermoformwerkzeug 4, welches das Werkzeugunterteil 5 und das Werkzeugoberteil 6 aufweist, als rein beispielhaft anzusehen. Gegebenenfalls kann auf das Werkzeugoberteil 6 auch verzichtet werden.

Beispielsweise können mit dem nachfolgend beschriebenen Verfahren Gehäuseteile, wie beispielsweise Spiegelabdeckungen für Kraftfahrzeuge, Verkleidungen für Schienen- oder Luftverkehrsmittel oder ähnliches, hergestellt werden.

Zur Durchführung des Verfahrens wird die Folie 2 dem Thermoformwerkzeug 4 zugeführt und das Anbauteil 3 wird in das Thermoformwerkzeug 4 eingelegt. Mit dem Thermoformwerkzeug 4 wird, wie in Fig. 2 dargestellt, die Folie 2 mittels Thermoformen umgeformt. Hierzu wird die Folie 2 bis in den thermoelastischen Zustand hinein erwärmt und anschließend mechanisch und/oder durch das Aufbringen einer Druckdifferenz zwischen der Oberseite und der Unterseite der Folie 2 umgeformt. Des Weiteren wird, wie nachfolgend ausführlich beschrieben, innerhalb des Thermoformwerkzeugs 4 das Anbauteil 3 mit der Folie 2 verbunden, um das Bauteil 1 zu bilden.

Obwohl im vorliegenden Fall eine sogenannte Positivformung an der Folie 2 durchgeführt wird, wäre es auch möglich, eine sogenannte Negativformung durchzuführen. Da sowohl die Positiv- als auch die Negativformung dem Fachmann bekannt sind, wird hierin nicht näher auf diese beiden unterschiedlichen Vorgehensweisen eingegangen.

Gleichzeitig mit der Umformung der Folie 2 wird innerhalb des Thermoformwerkzeugs 4 die feste Verbindung zwischen der Folie 2 und dem Anbauteil 3 hergestellt. Anschließend kann das Bauteil 1 aus dem Thermoformwerkzeug 4 entformt werden.

Die Verbindung zwischen dem Anbauteil 3 und der Folie 2 kann auf unterschiedliche Arten realisiert werden.

In Fig. 4 ist dargestellt, wie das Anbauteil 3 mittels Kleben mit der Folie 2 zu dem Bauteil 1 verbunden wird. Hierzu befindet sich zwischen dem Anbauteil 3 und der Folie 2 ein Klebemittel 7, das vor der Umformung des Anbauteils 3 in dem Verbindungsbereich zwischen dem Anbauteil 3 und der Folie 2, also in dem Bereich, in dem das Anbauteil 3 und die Folie 2 miteinander in Kontakt stehen bzw. miteinander verbunden werden, aufgebracht wird. Vorzugsweise wird das Klebemittel 7 auf das Anbauteil 3 aufgebracht. Dabei ist es möglich, jedoch nicht unbedingt erforderlich, die Klebwirkung des Klebemittels 7 durch die Wärmeenergie der zuvor erwärmten, aus dem thermoplastischen Material bestehenden Folie 2 zu aktivieren.

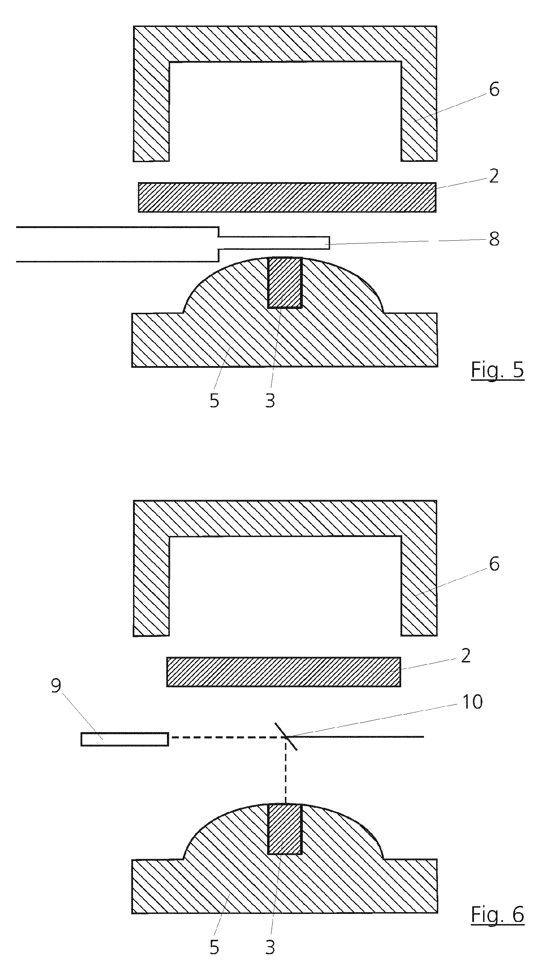

In den Figuren 5 bis 8 sind verschiedene Ausführungsformen einer Verfahrensvariante dargestellt, bei der das Anbauteil 3 mit der Folie 2 thermisch gefügt wird. Hierzu werden zumindest Abschnitte des Anbauteils 3 und der Folie 2, vorzugsweise im oben beschriebenen Verbindungsbereich, in den schmelzflüssigen Zustand überführt.

Zur Durchführung des thermischen Fügens des Anbauteils 3 mit der Folie 2 wird im vorliegenden Fall der Verbindungsbereich bzw. die Fügenaht zwischen dem Anbauteil 3 und der Folie 2 bis in den schmelzflüssigen Zustand erwärmt. Es findet also eine lokale Erwärmung in dem Verbindungsbereich zwischen dem Anbauteil 3 und der Folie 2 statt. Beispielsweise kann die zur Überführung der Folie 2 und des Anbauteils 3 in den schmelzflüssigen Zustand erforderliche thermische Energie in das Anbauteil 3 eingebracht und durch den Kontakt des Anbauteils 3 mit der Folie 2 über die Wärmeleitung auf die Folie 2 übertragen werden, wodurch die Folie 2 im Verbindungsbereich ebenfalls aufschmilzt und eine stoffliche Verbindung an der Grenzfläche bzw. der Fügenaht zwischen dem Anbauteil 3 und der Folie 2 entsteht. Hierbei können bereits bei einer relativ geringen Erwärmung der beteiligten Bauteile adhäsive Effekte eintreten, die für eine Verbindung des Anbauteils 3 mit der Folie 2 sorgen.

Wie in Fig. 5 dargestellt, kann die thermische Energie beispielsweise über von einem Infrarotstrahlungselement 8 in Richtung des Anbauteils 3 ausgesandter Infrarotstrahlung in das Anbauteil 3 eingebracht werden.

Eine andere Möglichkeit zur Einbringung der thermischen Energie in das Anbauteil 3 ist in Fig. 6 dargestellt. Hierbei ist eine Laserstrahlerzeugungseinrichtung 9 vorgesehen, die über einen Umlenkspiegel 10 Laserstrahlung auf das Anbauteil 3 aufbringt. Im Falle der Verwendung des Umlenkspiegels 10 könnte dieser beispielsweise nach dem Erwärmen des Anbauteils 3 in eine andere Position gebracht werden, um die Folie 2 zu erwärmen. Anschließend könnte dann das Anbauteil 3 mit der Folie 2 thermisch gefügt werden.

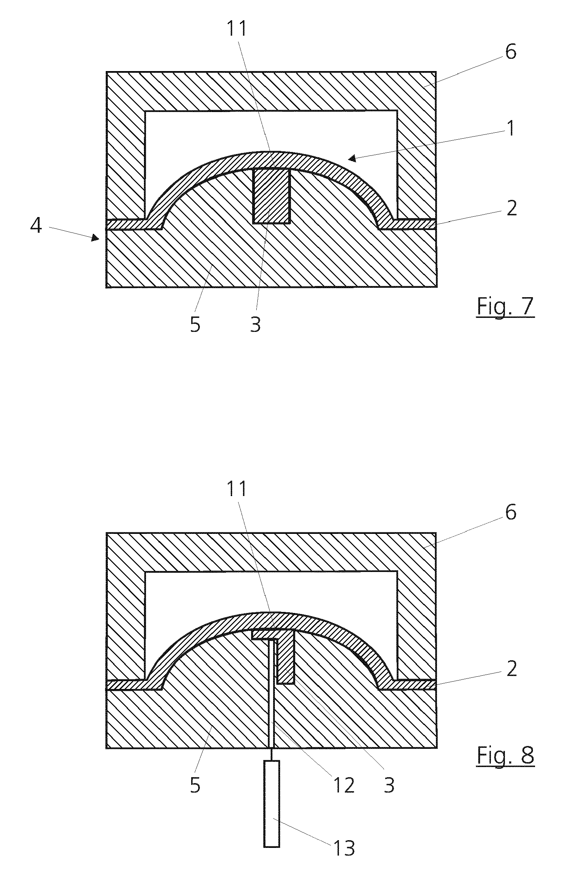

In Fig. 7 ist das durch die Anordnung in den Figuren 5 bzw. 6 erzeugte Bauteil 1 dargestellt, bei dem sich zwischen dem Anbauteil 3 und der Folie 2 eine Verbindungsnaht 11 befindet.

In nicht dargestellter Weise könnte die thermische Energie zum Anschmelzen der Oberfläche des Anbauteils 3 auch mittels Kontaktheizung, Heißluft oder auf andere geeignete Art und Weise erzeugt werden.

Des Weiteren wäre es auch möglich, die thermische Energie in die Folie 2 einzubringen und beim Kontakt der Folie 2 mit dem Anbauteil 3 die Wärme auf das Anbauteil 3 zu übertragen und dieses zumindest in dem Verbindungsbereich mit der Folie 2 in den schmelzflüssigen Zustand zu überführen. Diese Einbringung der thermischen Energie in die Folie 2 könnte zum Beispiel auf die oben beschriebenen Arten erfolgen. Dadurch, dass sich die Folie 2 bei der Thermoumformung bereits im thermoelastischen Bereich befindet, ist nur eine relativ geringe thermische Energiemenge erforderlich, um das thermische Fügen des Anbauteils 3 mit der Folie 2 zu erreichen. Aus diesem Grund ist es denkbar und stellt eine ebenfalls bevorzugte Variante des Verfahrens dar, lediglich das Anbauteil 3 zu erwärmen.

Das Anbauteil 3 und/oder die Folie 2 werden also auf eine gegenüber der Temperatur beim Thermoformen erhöhte Temperatur erwärmt. Der geeignete Temperaturbereich zur Erzeugung der thermischen Fügeverbindung hängt dabei vom verwendeten Kunststoffmaterial des Anbauteils 3 bzw. der Folie 2 ab und kann von einem Fachmann problemlos ermittelt werden.

Eine weitere Variante des Verfahrens zur Herstellung des Bauteils 1 ist in Fig. 8 dargestellt. Hierbei wird die thermische Energie zur Erzeugung der thermischen Fügeverbindung zwischen dem Anbauteil 3 und der Folie 2 erst dann in den Verbindungsbereich bzw. in die Fügenaht zwischen dem Anbauteil 3 und der Folie 2 eingebracht, nachdem der Umformvorgang der Folie 2 mittels Thermoformen bereits stattgefunden hat. Mit anderen Worten, die zur Erzeugung der thermischen Fügeverbindung erforderliche thermische Energie wird nach dem Thermoformen der Folie 2 in den Verbindungsbereich zwischen der Folie 2 und dem Anbauteil 3 eingebracht. Hierfür kann beispielsweise Laserstrahlung, Ultraschall oder Reibung eingesetzt werden.

Bei der Ausführungsform nach Fig. 8 ist hierzu in das Thermoformwerkzeug 4, im vorliegenden Fall in eine Aussparung in dem Werkzeugunterteil 5 des Thermoformwerkzeugs 4, ein Lichtwellenleiter 12 integriert, der von einer Laserstrahlerzeugungseinrichtung 13 mit Laserstrahlung versorgt wird. Die Laserstrahlung gelangt durch den Lichtwellenleiter 12 zu dem Anbauteil 3, um dieses in den schmelzflüssigen Zustand zu überführen und die Verbindung zwischen dem Anbauteil 3 und der Folie 2 auf die oben beschriebene Art und Weise herzustellen.

Alternativ könnte auf den Lichtwellenleiter 12 auch verzichtet und die von der Laserstrahlerzeugungseinrichtung 13 erzeugte Laserstrahlung durch eine Bohrung in dem Werkzeugunterteil 5 in den Verbindungsbereich zwischen der Folie 2 und dem Anbauteil 3 eingebracht werden.

In den dargestellten Ausführungsbeispielen ist jeweils lediglich ein Anbauteil 3 vorgesehen. Selbstverständlich kann grundsätzlich eine beliebige Anzahl an Anbauteilen 3 vorgesehen sein, und es ist dabei möglich, die Anbauteile 3 auf dieselbe oder gegebenenfalls auch auf eine unterschiedliche Art und Weise mit der Folie 2 zu verbinden.

Die beschriebenen Ausführungsformen der Erfindung können in beliebiger Art und Weise miteinander kombiniert werden, wenn nicht offensichtliche Gründe gegen eine bestimmte Kombination sprechen.

## Patentansprüche

1. Verfahren zur Herstellung eines Bauteils aus Kunststoff, wobei ein Anbauteil (3) in ein Thermoformwerkzeug (4) eingelegt wird, und wobei mit dem Thermoformwerkzeug (4) eine Folie (2) mittels Thermoformen umgeformt und das Anbauteil (3) mit der Folie (2) verbunden wird, um das Bauteil (1) zu bilden.

2. Verfahren nach Anspruch 1,
**dadurch gekennzeichnet, dass** das Anbauteil (3) vor dem Verbinden desselben mit der Folie (2) mittels Spritzgießen, Zerspanung oder einem generativen Verfahren hergestellt wird.

3. Verfahren nach Anspruch 1 oder 2,
**dadurch gekennzeichnet, dass** die Folie (2) vor dem Umformen mit dem Thermoformwerkzeug (4) in den thermoelastischen Bereich erwärmt wird.

4. Verfahren nach Anspruch 1, 2 oder 3,
**dadurch gekennzeichnet, dass** das Anbauteil (3) mittels thermischen Fügens mit der Folie (2) zu dem Bauteil (1) verbunden wird.

5. Verfahren nach Anspruch 4,
**dadurch gekennzeichnet, dass** zum thermischen Fügen des Anbauteils (3) mit der Folie (2) das Anbauteil (3) und/oder die Folie (2) zumindest in einem Verbindungsbereich zwischen dem Anbauteil (3) und der Folie (2) lokal erwärmt und in den schmelzflüssigen Zustand überführt werden.

6. Verfahren nach Anspruch 5,
**dadurch gekennzeichnet, dass** die zur Überführung der Folie (2) und des Anbauteils (3) in den schmelzflüssigen Zustand erforderliche thermische Energie in das Anbauteil (3) eingebracht und durch den Kontakt des Anbauteils (3) mit der Folie (2) auf die Folie (2) übertragen wird.

7. Verfahren nach Anspruch 5,
**dadurch gekennzeichnet, dass** die zur Überführung der Folie (2) und des Anbauteils (3) in den schmelzflüssigen Zustand erforderliche thermische Energie in die Folie (2) eingebracht und durch den Kontakt der Folie (2) mit dem Anbauteil (3) auf das Anbauteil (3) übertragen wird.

8. Verfahren nach Anspruch 6 oder 7,
**dadurch gekennzeichnet, dass** die thermische Energie mittels Infrarotstrahlung, Laserstrahlung, Kontaktheizung, Heißluft, Ultraschall oder Reibung in das Anbauteil (3) und/oder die Folie (2) eingebracht wird.

9. Verfahren nach Anspruch 1, 2 oder 3,
**dadurch gekennzeichnet, dass** das Anbauteil (3) mittels Kleben mit der Folie (2) zu dem Bauteil (1) verbunden wird.

10. Vorrichtung zur Durchführung des Verfahrens nach Anspruch 8, mit einem Thermoformwerkzeug (4) zur Aufnahme der Folie (2) und des Anbauteils (3), und mit einer Laserstrahlerzeugungseinrichtung (13) zur Einbringung von Laserstrahlung in einen Verbindungsbereich zwischen der Folie (2) und dem Anbauteil (3).
